# EUROPEAN PATENT APPLICATION

(11) **EP 2 582 077 A2**
(43) Date of publication of application: **17.04.2013**
(21) Application number: 12460075.0
(22) Date of filing: 12.10.2012
(51) Int. Cl.: H04J 14/06

(54) **Optical system for simultaneous separation of polarisation channels and amplification of orthogonal polarised light signals in a fibre-optic telecommunications system**

(30) Priority: 14.10.2011 PL 39664611
(71) Applicant: Telekomunikacja Polska S.A., 00-105 Warszawa (PL)
(72) Inventor: Perlicki, Krzysztof, 05-820 Piastow (PL)
(74) Representative: Piotrowicz, Alicja

(57) **Abstract**

The output of the input polarisation divider (PBC) is connected through the fibre-optic telecommunications link (FOL) with the input of the optical coupler (S). The output of the optical coupler (S) is connected with the input of the output polarisation divider (PBS) by means of the HNLF type fiber-optic section (FO). The non-linear phenomenon of Raman diffusion is produced in the HNLF type fibre-optic section (FO). A pumping laser (LP) is connected to the section of coupling fibre-optic of the optical coupler (S) through a light signal polarisation analysis and modification system.

## Description

The present invention relates to an optical system for simultaneous separation of polarisation channels and amplification of orthogonal polarised light signals in a fibre-optic telecommunications system with multiplexed division of optical polarisation (Polarisation Division Multiplexing), in which a section of HNLF (Highly Non-linear Fiber) is used.

X. S. Yao, in the work under the title: All-optic scheme for automatic polarisation division demultiplexing, Optics Express, 2007, vol. 15, No. 12, pp. 7407-7414, describes a fibre-optic telecommunications system with multiplexed division of optical polarisation, in which a feedback system is used within the demultiplexing process. The controller for light signal polarisation is installed directly in the fibre-optic telecommunication line and is controlled by means of amplifiers connected with photo detectors.

A system, equipment and method are known from the US 2010215374 A1 patent application for data transfer by means of multiplexed division of optical polarisation, whose data is transferred by means of orthogonal polarised light signals. The parameters of the polarised light signals are electronically processed with division of the demultiplexing time.

According to the invention, the essence to the optical system for simultaneous division of polarisation channels and amplification of orthogonal polarised light signals in a fibre-optic telecommunications system consists in that the output of input polarisation divider is connected with the input of the optical coupler by means of a fibre-optic telecommunications link. The output of the optical coupler is connected with the input of the output polarisation divider by means of an HNLF type fibre-optic section. A pumping laser is connected to the section of the coupling fibre-optic of the optical coupler through a light signal polarisation analysis and modification system.

The essential advantageous results of using the optical system for simultaneous separation of polarisation channels and amplification of orthogonal polarised light signals in a fibre-optic telecommunications system, according to the invention and in relation to the prior art, consist in that the simultaneous separation of polarisation channels and amplification of orthogonal polarised light signals is accomplished in real time, without delays, by means of only a single optical system, which is located within the receiving system of fibre-optic telecommunications.

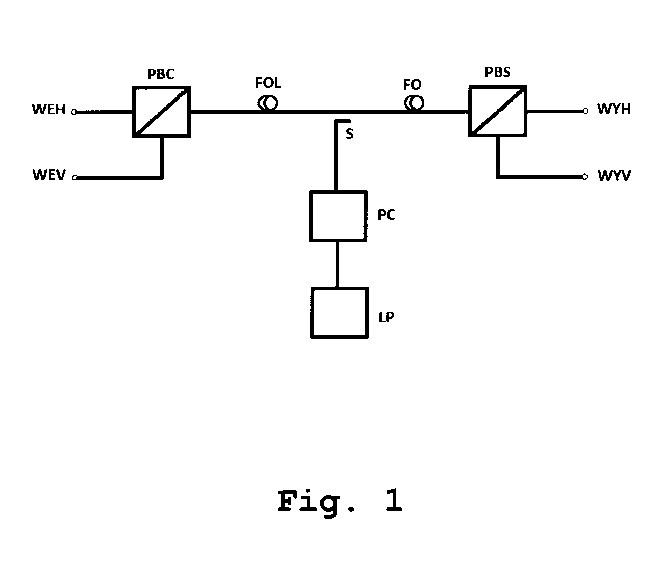

The embodiment of the optical system for simultaneous separation of polarisation channels and amplification of orthogonal polarised light signals in a fibre-optic telecommunications system, according to the invention, is represented in the figure in the form of a block diagram.

In the example embodiment of the optical system for simultaneous separation of polarisation channels and amplification of orthogonal polarised light signals in a fibre-optic telecommunications system, according to the invention, in its receiving part, in a single fibre and with a single wavelength, light signals having two orthogonal polarisation states are transmitted. The light polarisation status of the light signal being received at the input of the output polarisation divider PBS should be the linear one at a 45-degree azimuth. The light signals of horizontal polarisation are delivered to the input of the horizontally polarised light signal WEH, while vertically polarised light signals are delivered to the input of the horizontally polarised light signal WEV of the input polarisation divider PBC.

The output of the input polarization divider PBC is connected through the fibre-optic telecommunications link FOL with the input of the optical coupler S. The section of coupling fibre-optic of the optical coupler S is connected through the system of light signal polarisation analysis and modification PC with the pumping laser LP.

In the case when, following completion of received light signal analysis in the light signal polarisation analysis and modification system PC, deterioration of the quality of light signal polarisation parameters is found, they are then modified in real time.

Transmission of a linear polarisation status having a 45-degree azimuth to the light of the signal being received, on the input of the output polarisation divider PBS, and amplification of orthogonal light signals is accomplished by means of optical system including a pumping laser LP, a light signal polarisation analysis and modification system PC, the optical coupler S and a HNLF type fibre-optic section FO. It consists in the establishment of a pumping laser LP optical output numerical value, selection of set points for the light signal polarisation analysis and modification system PC, and in selection of the HNLF type fibre-optic section FO length.

The output of optical coupler S is connected with the HNLF type fibre-optic section FO, in which the phenomenon of non-linear forced Raman diffusion is produced. The HNLF type fibre-optic section FO is connected with the input of the output polarisation divider PBS. Orthogonal polarised light signals appear at the outputs, both the horizontal polarisation WYH and the vertical polarisation WYV, of the output polarisation divider PBS light signals.

Whereas the optical system for simultaneous separation of polarisation channels and amplification of orthogonal polarised light signals in a fibre-optic telecommunications system, according to the invention, was specified only by the use of a single claim, presented in the form of a specific embodiment description of the invention and represented in a figure, an expert in the art of optical systems for simultaneous separation of polarisation channels and amplification of orthogonal polarised light signals in a fibre-optic telecommunications systems will obviously recognise that data on the optical system for simultaneous separation of polarisation channels and amplification of orthogonal polarised light signals in a fibre-optic telecommunications system contained herein cannot be interpreted as limiting the idea of the invention only to the data itself.

### List of reference designations

WEH - input of horizontally polarised light signal,
WEV - input of vertically polarised light signal,
PBC - input polarisation divider,
FOL - telecommunications fibre-optic link,
S - optical coupler,
PC - analysis and modification system of light signal polarisation,
LP - pumping laser,
FO - HNLF type fibre-optic section,
PBS - output polarisation divider,
WYH - output of horizontally polarised light signal,
WYV - output of vertically polarised light signal.

## Claims

1. The optical system for simultaneous separation of polarisation channels and amplification of orthogonal polarised light signals in a fibre-optic telecommunications system with polarisation dividers and a laser, **characterised in that** the output of the input polarisation divider (PBC), through a telecommunications fibre-optic link (FOL), is connected with the input of an optical coupler (S), whose output is connected through the HNLF type fiber-optic section (FO) with the input of the output polarisation divider (PBS), while the pumping laser (LP) is connected, through the analysis and modification system (PC) of light signal polarisation, to the optical coupler (S) section of the coupling fibre-optic.
